(19) Europäisches Patentamt
European Patent Office
Office européen des brevets

(11) **EP 1 322 019 B1**

(12) **EUROPÄISCHE PATENTSCHRIFT**

(45) Veröffentlichungstag und Bekanntmachung des Hinweises auf die Patenterteilung:
**06.07.2011 Patentblatt 2011/27**

(51) Int Cl.:
***H02H 3/40*** *(2006.01)*

(21) Anmeldenummer: **02090413.2**

(22) Anmeldetag: **17.12.2002**

(54) **Distanzschutzverfahren und Distanzschutzeinrichtung**

Distance protection method and device

Procédé et dispositif de protection de distance

(84) Benannte Vertragsstaaten:
**AT DE FR GB IT**

(30) Priorität: **18.12.2001 DE 10164525**

(43) Veröffentlichungstag der Anmeldung:
**25.06.2003 Patentblatt 2003/26**

(73) Patentinhaber: **SIEMENS AKTIENGESELLSCHAFT**
**80333 München (DE)**

(72) Erfinder: **Schneerson, Eduard, Prof.**
**90765 Fürth (DE)**

(56) Entgegenhaltungen:
**EP-A- 0 994 548     DE-A1- 1 763 373**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung bezieht sich auf ein Distanzschutzverfahren zum Erfassen von Fehlern auf einem Abschnitt einer elektrischen Energieübertragungsstrecke mit zumindest einer ersten zu überwachenden Leitung und einer zweiten Leitung. Anhand von an der ersten Leitung erfasster Spannungs- und Strommessgrößen wird ein erster elektrischen Impedanzwert der ersten Leitung ermittelt. Auf einen Fehler auf der ersten Leitung wird dann erkannt, wenn der erste Impedanzwert in einem Hinblick auf den zu überwachenden Abschnitt der Energieversorgungsstrecke vorgegebenen Auslösebereiche liegt. Ein solches Verfahren ist aus dem Buch "Schutztechnik in Elektroenergiesystemen" der Autoren Heinz Clemens und Klaus Rothe, VEB Verlag Technik, Berlin 1991, Seiten 65 bis 69 bekannt. Bei dem bekannten Verfahren wird jeder ermittelte Impedanzwert, der im vorgegebenen Auslösebereich liegt als Fehler auf der ersten Leitung interpretiert.

Ein weiteres Schutzverfahren ist aus EP 0 994 548 bekannt.

Der Auslösebereich wird in der Regel so groß vorgegeben, dass er auch Impedanzwerte einschließt, die von hochohmigen Fehlern herrühren. Dabei muss selbstverständlich beachtet werden, dass die Impedanzwerte, die von den üblicherweise angeschlossenen Lasten herrühren, klar außerhalb des Auslösegebiets liegen. Orientiert man sich daher bei der Auslegung der Größe des Auslösebereichs an der niederohmigsten zu erwartenden Last, so kann es im Fall des Betriebs der zu überwachenden Leitung mit einer hochohmigen Last zur Problem bei der Fehlererkennung kommen; ein auf der Leitung auftretender Fehler kann nämlich so hochohmig sein, dass der Impedanzwert, der unter Anliegen der hochohmigen Last und gleichzeitigem Anliegen des hochohmigen Fehlers ermittelt wurde, immer noch außerhalb des Auslösegebiets liegt und daher nicht als Fehler erkannt wird. Orientiert man sich hingegen bei der Auslegung der Größe des Auslösebereichs an den hochohmigsten zu erwartenden Fehler, so kann dies zu Problemen führen, wenn die zu überwachende Leitung mit einer Last betrieben wird, die niederohmiger als der hochohmigste zu erwartende Fehler ist, so dass der dabei ermittelte Impedanzwert innerhalb des Auslösebereichs liegt. Dann wird diese nicht mit einem Fehler behaftete Last fälschlicherweise als ein Fehler erkannt, was zur Abschaltung der überwachten Leitung führen kann.

Die Aufgabe der Erfindung ist es, ein Distanzschutzverfahren anzugeben, bei dem die Gefahr eines fehlerhaften Erkennens auf einen Fehler gering ist.

Diese Aufgabe wird mit einem Distanzschutzverfahren zur Erfassung eines elektrischen Fehlers auf einem zu überwachenden Abschnitt einer elektrischen Energieversorgungsstrecke mit zumindest einer ersten zu überwachenden elektrischen Leitung und einer zweiten elektrischen Leitung gelöst, bei dem ein erster elektrischer Impedanzwert der ersten Leitung anhand von an dieser erfassten Spannungs- und Strommessgrößen ermittelt wird, ein zweiter elektrischer Impedanzwert der zweiten Leitung anhand von an dieser erfassten Spannungs- und Strommessgrößen ermittelt wird, eine Abweichung des ersten Impedanzwerts wird von dem zweiten Impedanzwert ermittelt wird und auf einen Fehler auf der ersten Leitung wird erkannt wird, wenn der erste Impedanzwert innerhalb eines im Hinblick auf den zu überwachenden Abschnitt der Energieversorgungsstrecke vorgegebenen Auslösebereichs liegt und die Abweichung der Impedanzwerte größer als eine vorgegebenen Grenzabweichung ist.

Bei diesem Verfahren wird auf einen Fehler nicht nur allein anhand des Fehlerkriteriums, das der erste Impedanzwert im Auslösebereich liegt, geschlossen, sondern dazu wird zusätzlich die Symmetrie der elektrischen Belastung der zumindest zwei Leitungen ausgewertet, in dem die Abweichung des ersten elektrischen Impedanzwerts vom zweiten elektrischen Impedanzwert ermittelt und mit der Grenzabweichung verglichen wird; dabei wird bei einem im Auslösebereich liegenden ersten Impedanzwert nur dann auf einen Fehler auf der ersten Leitung erkannt, wenn auch die Abweichung der Impedanzen oberhalb der Grenzabweichung liegt. Dadurch ist die Gefahr eines fehlerhaften Erkennens auf einen Fehler im Fall eines nicht durch einen Fehler verursachten, sondern von einer niederohmigen Last herrührenden, im Auslösegebiet liegenden ersten Impedanzwert vermieden. Ein im Auslösegebiet liegender, von einem Fehler auf der ersten Leitung herrührender Impedanzwert kann aber unter Heranziehung des zweiten Kriteriums erkannt werden, weil dann in der Regel die Abweichung der Impedanzwerte oberhalb der Grenzabweichung liegt. Dabei deutet eine oberhalb der Grenzabweichung liegende Abweichung der Impedanzwerte auf eine unsymmetrische Belastung der Energieversorgungsstrecke, also auf stark unterschiedliche elektrische Impedanzwerte der beiden Leitungen hin, wohin gegen eine unterhalb der Grenzabweichung liegende Abweichung der Impedanzwerte auf eine symmetrische Belastung der elektrischen Energieversorgungsstrecke verursacht durch eine entsprechend niederohmige symmetrische Last hindeutet. Die Überprüfung der Symmetrie der Belastung der Energieversorgungsstrecke kann alternativ oder zusätzlich zu einem Vergleich der ermittelten Impedanzwerte auch über einen Vergleich der Lastströme und/oder der Lastspannungen erfolgen. Diese sind bei einer unsymmetrischen Belastung auch entsprechend stark unterschiedlich.

Unter einer elektrischen Leitung werden beispielsweise die mittels eines Phasenleiters und Erdpotential gebildete Leitung (Phase-Erde-Schleife) oder die mit zwei Phasenleitern gebildete Leitung (Phase-Phase-Schleife) verstanden, wobei die erste, bzw. die zweite Leitung jeweils gleichartig Leitungen sein müssen. Das heißt, wenn die erste Leitung eine Phase-Erde-Leitung ist, muss auch die zweite Leitung eine Phase-Erde-Leitung sein. Entsprechendes gilt, wenn die erste Leitung eine Phase-Phase-Leitung ist.

Vorzugsweise wird bei dem Distanzschutzverfahren unmittelbar auf einen Fehler auf der ersten Leitung erkannt, wenn der erste Impedanzwert in einem im Vergleich zum vorgegebenen Auslösebereich relativ kleinen Festauslösebereich liegt. Der Festauslösebereich ist beispielsweise so gewählt, dass unter Berücksichtigung der Belastbarkeit der ersten elektrischen Leitung die Impedanzwerte darin liegen, bei denen die elektrische Leitung in keinem Fall betrieben werden darf, egal, ob es sich dabei um einen durch eine niederohmige Last oder durch einen elektrischen Fehler hervorgerufenen Impedanzwert handelt. Das Verfahren ist durch das Vorsehen des Festauslösebereichs besonders schnell, da bei einem in dem Festauslösebereich liegenden Impedanzwert keine Überprüfung der Symmetrie mehr erfolgt, sondern sofort unmittelbar auf einen Fehler erkannt wird.

Bei dem Distanzschutzverfahren werden zur Ermittlung der Abweichung der Impedanzwerte vorzugsweise die jeweiligen Realteile der ermittelten Impedanzwerte bestimmt und es wird die Abweichung als das Verhältnis aus der Differenz von größtem und kleinstem Realteil zu dem größten im Realteil ermittelt. Dies ist eine besonders einfache Vorgehensweise zur Ermittlung der Abweichung der Impedanzwerte voneinander.

In einer anderen Ausgestaltung des Distanzschutzverfahrens werden zur Ermittlung der Abweichung der Impedanzwerte die jeweiligen Imaginärteile der ermittelten Impedanzwerte bestimmt und es wird die Abweichung als das Verhältnis aus der Differenz von größtem und kleinstem Imaginärteil zu dem größten Imaginärteil ermittelt. Dies ist eine andere einfache Vorgehensweise, um die Abweichung der Impedanzwerte voneinander zu ermitteln.

In einer besonders bevorzugten Ausgestaltung des Distanzschutzverfahrens wird bei einer unterhalb der Grenzabweichung liegenden Abweichung der Impedanzwerte der Auslösebereich derart adaptiert, dass die ermittelten Impedanzwerte außerhalb des adaptierten Auslösebereichs mit einem vorgegebenen Mindestabstand dazu liegen. Durch die Adaption des Auslösebereichs ist die Sicherheit des Distanzschutzverfahrens weiter erhöht, da durch die Adaption der Auslösebereich immer so eingestellt wird, dass von einer normalen Last herrührende Impedanzwerte nach dem Erkennen außerhalb des Auslösebereichs liegen. Treten nach einer solchen Adaption des Auslösebereichs - also bei einem erneuten Durchlauf des Verfahrens - betriebsbedingte Abweichungen der Impedanzwerte auf, die von einer normalen Last herrühren, so werden diese richtigerweise auch nicht als Fehler erkannt, da sie nun außerhalb des adaptierten Auslösebereichs liegen; dies trifft auch dann zu, wenn die Abweichung der außerhalb des Auslösebereichs liegenden Impedanzwerte sogar größer als die Grenzabweichung ist. Mit der Adaption wird der Auslösebereich den Lastimpedanzen entsprechend nachgeführt.

Prinzipiell kann der adaptierte Auslösebereich im Laufe seiner Adaption eine beliebige Größe annehmen. Vorzugsweise bildet jedoch der vorgegebene Auslösebereich die obere Adaptionsgrenze für den adaptiven Auslösebereich. Dadurch ist die obere Grenze des adaptiven Auslösebereichs im Hinblick auf den zu überwachenden Abschnitt der Strecke sinnvoll festgelegt.

Prinzipiell kann der vorgegebene Auslösebereich durch jede beliebige Kennlinie, beispielsweise als sogenannte Knochenkennlinie, wie sie aus der Siemens Druckschrift "Numerical Distance Protection Relay", SIPROTEC 7SA511, V3.2, Seite 39, erhältlich unter der Bestellnummer C53000-G1176-C98, bekannt ist oder durch eine der Kennlinien, wie sie aus dem eingangs genannten Buch bekannt sind, definiert sein. Bevorzugt ist als vorgegebener Auslösebereich eine unsymmetrische Polygonkennlinie vorgesehen. Eine unsymmetrische Polygonkennlinie weist insbesondere den Vorteil der Richtwirkung auf.

Die Erfindung betrifft auch eine Distanzschutzeinrichtung zum Ermitteln eines elektrischen Fehlers auf einem Abschnitt einer elektrischen Energieversorgungsstrecke mit zumindest einer ersten zu überwachenden elektrischen Leitung. Aus dem eingangs genannten Buch ist auch eine solche Distanzschutzeinrichtung bekannt. Mit der Distanzschutzeinrichtung wird anhand von an der ersten elektrischen Leitung erfassten Spannungs- und Strommesswerten ein erster Impedanzwert der ersten elektrischen Leitung ermittelt und überprüft, ob der erste elektrische Impedanzwert in einem vorgegebenen Auslösebereich liegt. Die Distanzschutzeinrichtung ist zum Erkennen eines Fehlers auf der ersten elektrischen Leitung allein anhand des ersten elektrischen Impedanzwerts ausgelegt. Daraus ergibt sich der auch schon beim Distanzschutzverfahren nach dem Stand der Technik erläuterte Nachteil, dass bei einer niederohmigen Last, die zu einem ersten Impedanzwert führt, der innerhalb des Auslösebereichs liegt, fehlerhaft auf einen Fehler auf der ersten Leitung erkannt wird.

Eine weitere Aufgabe der Erfindung ist es daher, eine Distanzschutzreinrichtung anzugeben, das eine Überwachung einer elektrischen Leitung mit einer geringen Gefahr eines fehlerhaften Erkennens auf einen Fehler erlaubt.

Diese Aufgabe wird erfindungsgemäß mit einer Distanzschutzeinrichtung zum Ermitteln eines elektrischen Fehlers auf einem Abschnitt einer elektrischen Energieversorgungsstrecke mit zumindest einer ersten zu überwachenden Leitung und einer zweiten Leitung, mit einer ersten Impedanzstufe zur Ermittlung eines ersten Impedanzwerts der ersten Leitung anhand von an dieser erfassten Spannungs- und Strommesswerten, einer zweiten Impedanzstufe zur Ermittlung eines zweiten Impedanzwerts der zweiten Leitung anhand von an dieser erfassten Spannungs- und Strommesswerten, einer Abweichungsstufe zur Ermittlung einer Abweichung des ersten Impedanzwerts vom zweiten Impedanzwert, einer Vergleichsstufe zum Vergleichen der ermittelten Abweichung der Impedanzwerte mit einer vorgegebenen Grenzabweichung, einer Komparationsstufe zum Vergleichen des ersten Impedanzwerts mit einem vorgegebenen Auslösebereich und einer Fehlerstufe zum Erzeugen eines einen Fehler anzeigenden Fehlersignals, wenn der Impedanzwert innerhalb des vorgegebenen Auslösebereichs liegt und die Abweichung der Impedanzwerte größer ist als die Grenzabweichung, gelöst.

Dadurch, dass eine zweite Impedanzstufe, die Abweichungsstufe und die Vergleichsstufe vorgesehen sind, kann zusätzlich als zweites Kriterium für einen Fehler die Abweichung des ersten Impedanzwerts von dem zweiten Impedanzwert im Vergleich zu einer Grenzabweichung ermittelt werden. Die Fehlerstufe erzeugt nur dann ein fehleranzeigendes Fehlersignal, wenn der Impedanzwert innerhalb des vorgegebenen Auslösebereichs liegt und gleichzeitig die Abweichung der Impedanzwerte größer ist als die Grenzabweichung. Insoweit wird also, wie auch bei dem erfindungsgemäßen Distanzschutzverfahren, die Überprüfung der Symmetrie der Belastung der ersten und der zweiten elektrischen Leitung, bzw. die Größe der Abweichung der Impedanzwerte voneinander als zweites Kriterium zum Erkennen eines Fehlers herangezogen. Dadurch ist im Fall eines von einer fehlerfreien, aber niederohmigen Last herrührenden ersten Impedanzwerts innerhalb des Auslösegebiets ein Erkennen auf einen Fehler vermieden, weil in diesem Fall das zweite Kriterium - Abweichung des ersten Impedanzwertes vom zweiten Impedanzwert - nicht erfüllt ist. Ein im Auslösegebiet liegender Fehler auf der ersten Leitung wird aber durch die Auswertung des zweiten Kriteriums sicher erkannt. Insoweit lässt sich mit der erfindungsgemäßen Distanzschutzeinrichtung ein im Auslösegebiet liegender, von einer fehlerfreien Last herrührender Impedanzwert klar von einem im Auslösegebiet liegenden von einem Fehler herrührenden Impedanzwert abgrenzen.

Bevorzugt weist die Distanzschutzreinrichtung eine Signalstufe zur unmittelbaren Erzeugung des den Fehler anzeigenden Fehlersignals in dem Fall auf, dass der erste Impedanzwert in einem im Vergleich zum vorgegebenen Auslösebereich relativ kleinen Festauslösebereich liegt. Auch hier lässt sich mit dem, wie auch schon beim erfindungsgemäßen Distanzschutzverfahren angegebenen entsprechend gewählten Festauslösebereich erreichen, dass ein darin liegender ermittelter erster Impedanzwert zu einem sofortigen Erkennen auf einen Fehler führt, ohne dass weitere Stufen der Distanzschutzreinrichtung aktiv werden müssen.

In einer bevorzugten Ausgestaltung weist die Distanzschutzreinrichtung eine Adaptionsstufe auf, mit der der Auslösebereich unter Berücksichtigung der ermittelten Impedanzwerte und eines vorgegebenen Mindestabstandes zwischen den Impedanzwerten und Auslösebereich adaptiert wird. Dadurch kann der Auslösebereich adaptiert werden; durch die Adaption wird, wie auch schon beim erfindungsgemäßen Distanzschutzverfahren beschrieben, der Auslösebereich den aufgrund von nichtfehlerbehafteten Lasten hervorgerufenen ersten Impedanzwerten nachgeführt.

Anhand der Zeichnung wird das erfindungsgemäße Distanzschutzverfahren und die erfindungsgemäße Distanzschutzeinrichtung näher erläutert.

Es zeigen:

Figur 1     einen Abschnitt einer Energieversorgungsstrecke,
Figur 2     einen vorgegebenen Auslösebereich,
Figur 3     ein Diagramm für das Distanzschutzverfahren,
Figur 4     einen adaptierten Auslösebereich,
Figur 5     verschiedene Fälle auftretender Impedanzwerte und
Figur 6     eine Distanzschutzeinrichtung.

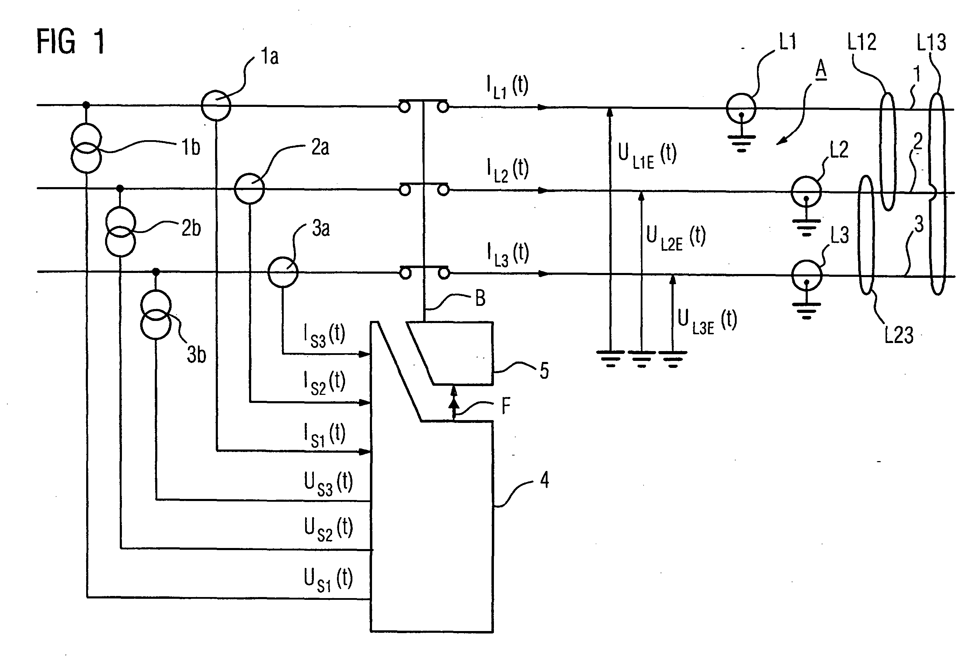

Die Figur 1 zeigt eine schematische Darstellung eines Abschnitts A einer elektrischen Energieversorgungsstrecke mit drei Leitern 1 bis 3. Mit jedem der Leiter 1 bis 3 ist jeweils gemeinsam mit dem Erdpotential je eine elektrische Leitung L1, L2 bzw. L3 eines Dreiphasensystems gebildet. Zur Erfassung der sich in den Leitern 1 bis 3 jeweils ausbildenden Phasenströme $I_{L1}$, $I_{L2}$ bzw. $I_{L3}$, sind Stromwandler 1A, 2A bzw. 3A vorgesehen, die den jeweiligen Leiterströmen $I_{L1}$, $I_{L2}$ bzw. $I_{L3}$ entsprechende Strommessgrößen $I_{S1}$, $I_{S2}$ bzw. $I_{S3}$ an eine an diese angeschlossene Distanzschutzreinrichtung 4 abgeben. Entsprechend werden mit Spannungswandlern 1B, 2B bzw. 3B den Leiter-Erde-Spannungen $U_{L1E}$, $U_{L2E}$ bzw. $U_{L3E}$ entsprechende Spannungsmessgrößen $U_{S1}$, $U_{S2}$ bzw. $U_{S3}$ an das an diese angeschlossene Distanzschutzgerät 4 abgegeben. Mit dem Distanzschutzgerät 4 werden anhand der erfassten Spannungs- und Strommessgrößen $U_{S1}$ und $I_{S1}$, $U_{S2}$ und $I_{S2}$ bzw. $U_{S3}$ und $I_{S3}$ für jede der Leitungen L1, L2 bzw. L3 wie bekannt die zugehörigen Impedanzwerte $Z_{L1}$, $Z_{L2}$ bzw. $Z_{L3}$ ermittelt. Zur Überwachung beispielsweise der Leitung L1 wird mit der Distanzschutzeinrichtung 4 überprüft, ob der Impedanzwert $Z_{L1}$ in dem im Hinblick auf den Abschnitt A der Energieversorgungsstrecke bemessenen Auslösebereich liegt. Ein in dem Auslösebereich liegender Impedanzwert $Z_{L1}$ deutet zunächst auf einen Fehler auf der ersten elektrischen Leitung L1 hin. Allerdings wird dieses erste Kriterium, nämlich ob der ermittelte Impedanzwert $Z_{L1}$ im Auslösebereich liegt oder nicht, nicht allein herangezogen, um einen Fehler zu erkennen. Ein solches Vorgehen wäre nämlich bei niederohmigen Lasten, die entsprechend dreiphasig ausgebildet an die Leitungen L1, L2 und L3 geschaltet sind, problematisch, weil solche niederohmigen Lasten zu Impedanzwerten $Z_{L1}$, $Z_{L2}$ bzw. $Z_{L3}$ führen können, die innerhalb des zugrundliegenden Auslösebereichs liegen können. Daher würde bei alleinigem Heranziehen des ersten Kriteriums bei einer solchen niederohmigen Last eine Abschaltung der Leitungen L1 bis L3 und damit der Last vorgenommen werden, weil aufgrund der im Auslösebereich liegenden Impedanzwerte $Z_{L1}$, $Z_{L2}$ bzw. $Z_{L3}$ fälschlicherweise auf einen Fehler auf der Leitung L1, L2 bzw. L3 geschlossen werden würde. Um ein solches fehlerhaftes Erkennen auf einen Fehler bei einer niederohmigen, aber nicht mit einem Fehler behafteten Last zu vermeiden, wird erfindungsgemäß ein zusätzliches zweites Kriterium herangezogen. Als zweites Kriterium wird die Symmetrie der Belastung der Leitungen L1, L2 und L3 überprüft. Auf einen beispielsweise auf der ersten Leitung L1 liegenden Fehler wird nur dann erkannt, wenn der für die erste Leitung L1 ermittelte Impedanzwert $Z_{L1}$ im Auslösebereich liegt und zusätzlich eine unsymmetrische Belastung zumindest der Leitungen L1 und L2 vorliegt. Hier wird die Belastung aller drei Leitungen L1 bis L3 herangezogen. Bei einem anhand des ersten und des zweiten Kriteriums erkannten Fehler wird von der Distanzschutzeinrichtung 4 ein einen Fehler anzeigendes Fehlersignal F an eine mit der Distanzschutzeinrichtung 4 verbundene Schaltersteuereinrichtung 5 abgegeben. Mittels der Schaltersteuereinrichtung 5 wird dann über entsprechende Schalter eine Abschaltung der ersten Leitung L1 und der weiteren Leitungen L2 und L3 vorgenommen.

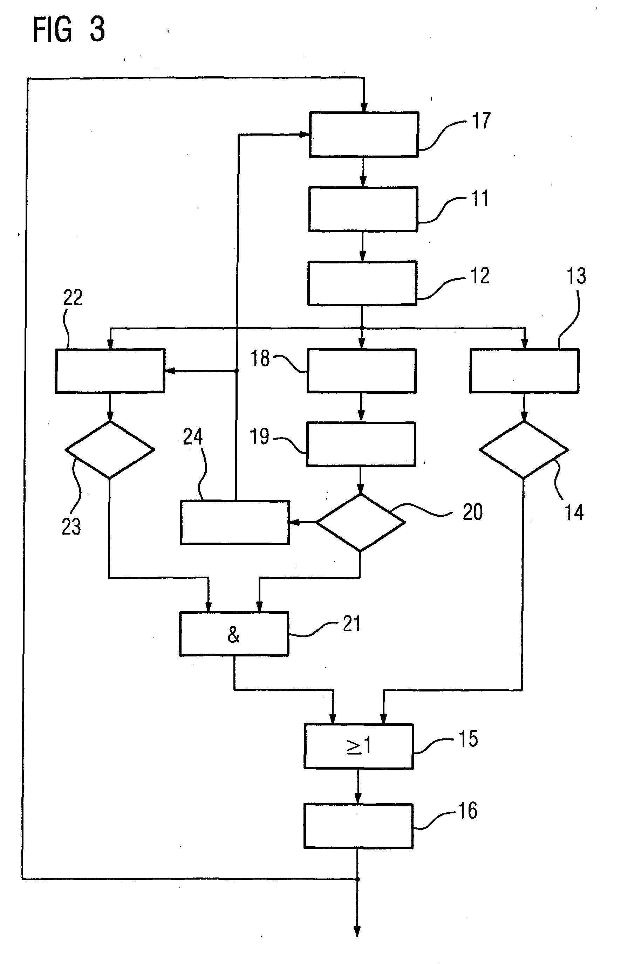

Zur Überprüfung der Symmetrie der Belastung wird überprüft, wie stark sich die Impedanzwerte $Z_{L1}$, $Z_{L2}$ und $Z_{L3}$ voneinander unterscheiden. Dies wird bei der Beschreibung zu Figur 3 näher erläutert. Selbstverständlich kann die Überprüfung der Symmetrie der Belastung der Leitungen L1 bis L3 auch durch Vergleich der Strommessgrößen $I_{S1}$, bis $I_{S3}$ oder der Spannungsmessgrößen $U_{S1}$ bis $U_{S3}$ selbst erfolgen; wichtig ist nur, dass sich eine Aussage über die Symmetrie der Belastung der Leitungen L1 bis L3 geben lässt.

Das erfindungsgemäße Distanzschutzverfahren lässt sich selbstverständlich auch auf die mit jeweils zwei der Leiter L1 bis L3 gebildeten Leitungen, also die mit den Leitern L1 und L2, bzw. L2 und L3, bzw. L3 und L1 gebildeten Leitungen L12, L23 bzw. L13 (auch als Phase-Phase-Schleifen bezeichnet) anwenden. Wichtig ist nur, dass bei der Überprüfung der Symmetrie anhand der Abweichung von Impedanzwerten immer Impedanzwerte gleichartiger Leitungen miteinander verglichen werden.

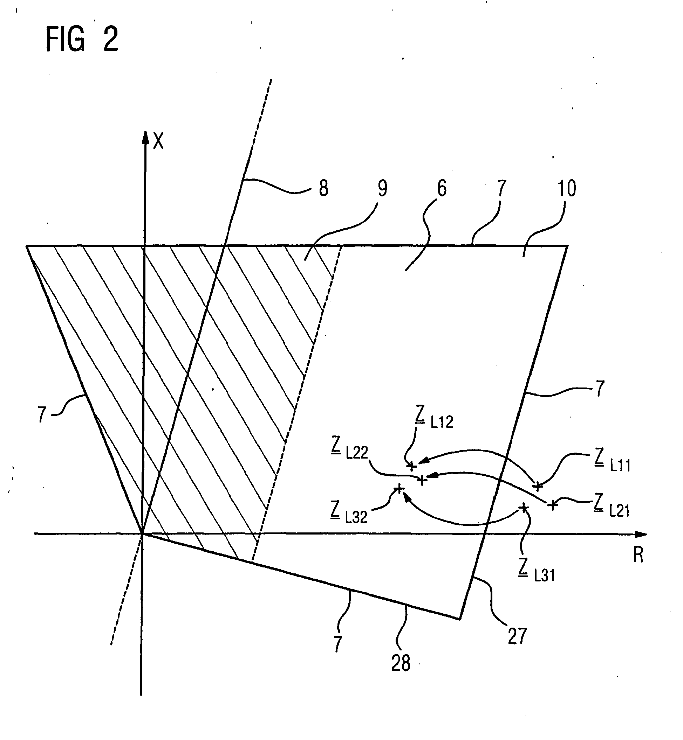

In Figur 2 ist ein Auslösebereich in der komplexen Impedanzebene dargestellt. Dabei ist zunächst ein vorgegebener Auslösebereich 6 vorgesehen, der durch die äußere Umrandung 7 begrenzt ist. Der vorgegebene Auslösebereich 6 ist durch eine unsymmetrische Polygonkennlinie gebildet. Mit dem Bezugszeichen 8 ist die Leitungsgerade der Leitung L1 bezeichnet. Neben dem vorgegebenen Auslösebereich 6 ist ein sogenannter Festauslösebereich 9 vorgesehen, der schraffiert dargestellt ist. Insoweit überdecken sich der vorgegebene Auslösebereich 6 und der Festauslösebereich 9. Der Festauslösebereich 9 ist dabei so gewählt, dass die darin liegenden Impedanzwerte auf keinen Fall toleriert werden können und eine sofortige Abschaltung der Leitung L1 vorgenommen werden muss. Wie später (bei der Beschreibung zu Figur 3) noch erläutert, kann anstelle des fest vorgegebenen Auslösebereichs 6 auch ein adaptierter Auslösebereich 10 vorgesehen sein. Der adaptierte Auslösebereich 10 ist in seiner größten Ausdehnung deckungsgleich zum vorgegebenen Auslösebereich 6. Der adaptierte Auslösebereich 10 kann so vorgegeben sein, dass er in seiner kleinsten Ausdehnung deckungsgleich zum Festauslösebereich 9 ist.

Sofern ein erster Impedanzwert ermittelt wurde, der in den vorgegebenen Auslösebereichs 6 fällt, wird zusätzlich zur Überprüfung auf einen Fehler die Symmetrie der Belastung der Leitungen ZL1 bis ZL3 überprüft. Parallel dazu wird überprüft, ob der ermittelte erste Impedanzwert $Z_{L1}$ im Festauslösebereich 9 liegt. Ist dies der Fall, dann wird sofort und dadurch sehr schnell auf einen Fehler erkannt.

Für die Erläuterung des erfindungsgemäßen Distanzschutzverfahrens anhand der Figur 3 sei zunächst angenommen, dass für die Leitungen L1 bis L3 zunächst die in Figur 2 eingezeichneten Impedanzwerte ZL11, ZL21 bzw. ZL31 vorliegen und ein plötzlicher Lastsprung erfolgt, so dass nunmehr die aktuellen Impedanzwerte ZL12, ZL22 und ZL32 ermittelt werden.

Das Verfahren wird näher anhand des in Figur 3 dargestellten Diagramms erläutert. Mit Bezugszeichen 11 ist der Start des erfindungsgemäßen Distanzschutzverfahrens markiert. In Schritt 12 wird zunächst der erste Impedanzwert, hier ZL12 ermittelt. In Schritt 13 wird der ermittelte Impedanzwert ZL12 mit dem Festauslösebereich 9 verglichen. Gemäß dem Entscheidungsschritt Verzweigung 14 wird bei einem im Festauslösebereich 9 liegenden ersten Impedanzwert ZL12 sofort über den Schritt 15, in dem lediglich eine ODER-Verknüpfung vorgenommen wird, zum Schritt 16 mit der Bedeutung, dass ein Fehler auf der ersten Leitung erkannt ist, übergegangen. Vorliegend liegt der erste Impedanzwert ZL12 außerhalb des Festauslösebereichs 9. Nach dem Schritt 12 zur Ermittlung des ersten Impedanzwertes ZL12 wird in Schritt 22 parallel überprüft, ob der ermittelte Impedanzwert ZL12 innerhalb des vorgegebenen Auslösebereichs 6 liegt. Mit dem Verzweigungsschritt 23 wird auf den Schritt 21 übergegangen, wenn dies der Fall ist. Ebenso parallel wird nach dem Ermitteln des ersten Impedanzwertes in Schritt 12 zu Schritt 18 übergegangen, in dem auch der zweite Impedanzwert ZL22 der zweiten Leitung L2 und der dritte Impedanzwert ZL32 der dritten Leitung ermittelt werden. Anschießend wird in Schritt 19 ein Vergleich der Impedanzwerte ZL12, ZL22 und ZL32 vorgenommen, wobei eine Abweichung AW der Impedanzwerte LZ12, ZL22 und ZL32 voneinander ermittelt wird. Dazu werden die Realteile RL12, RL22 bzw.

RL32 der Impedanzwerte ZL12, ZL22 bzw. ZL32 bestimmt und als Abweichung AW wird das Verhältnis gebildet aus der Differenz von größtem zu kleinstem der ermittelten Realteile zu dem größten der ermittelten Realteile. Dies ist auch in Formel 1 angegeben.

$$AW = \frac{Max\{R_{L12}, R_{L22}, R_{L32}\} - Min\{R_{L12}, R_{L22}, R_{L32}\}}{Max\{R_{L12}, R_{L12}, R_{L32}\}} \qquad (1)$$

Alternativ dazu kann die Abweichung AW auch in der analog zu Formel 1 gegebenen Formel 2 für die Imaginärteile XL12, XL22, XL32 der Impedanzwerte ZL12, ZL22, ZL32 ermittelt werden.

$$AW = \frac{Max\{X_{L12}, X_{L22}, X_{L32}\} - Min\{X_{L12}, X_{L22}, X_{L32}\}}{Max\{X_{L12}, X_{L22}, X_{L32}\}} \qquad (2)$$

In Schritt 19 wird die ermittelte Abweichung AW mit einem anhand von Erfahrungswerten, anhand von Messungen oder anhand von Berechnungen ermittelten Grenzabweichung verglichen. Bei einer oberhalb der Grenzabweichung liegenden Abweichung AW wird zum Schritt 21 übergegangen.

Im Schritt 21 wird überprüft, ob gemäß Entscheidungsstufe 20 eine oberhalb der Grenzabweichung liegende Abweichung A für die Impedanzwerte vorliegt und gleichzeitig der erste Impedanzwert ZL12 innerhalb des vorgegebenen Auslösebereiches 6 liegt. Ist das der Fall, wird über den ODER-Verknüpfungsschritt 15 direkt zum Schritt 16 übergegangen, der bedeutet, dass auf der ersten elektrischen Leitung L1 ein Fehler erkannt wurde. Im vorliegenden Fall ist die Abweichung AW der Impedanzwerte ZL12, ZL22 und ZL32 kleiner als die Grenzabweichung. Damit kann das erfindungsgemäße Distanzschutzverfahren erneut gestartet werden und insoweit eigenständig ablaufen, wobei der vorgegebene Auslösebereich 6 fest beibehalten werden kann.

Ein erneuter Start des Verfahrens erfolgt über Schritt 17, in dem u.a. überprüft wird, ob ein Fehler erkannt wurde oder nicht. Die von Schritt 24 kommende Information wird nur verarbeitet, wenn eine Auslösebereichsadaption erfolgt.

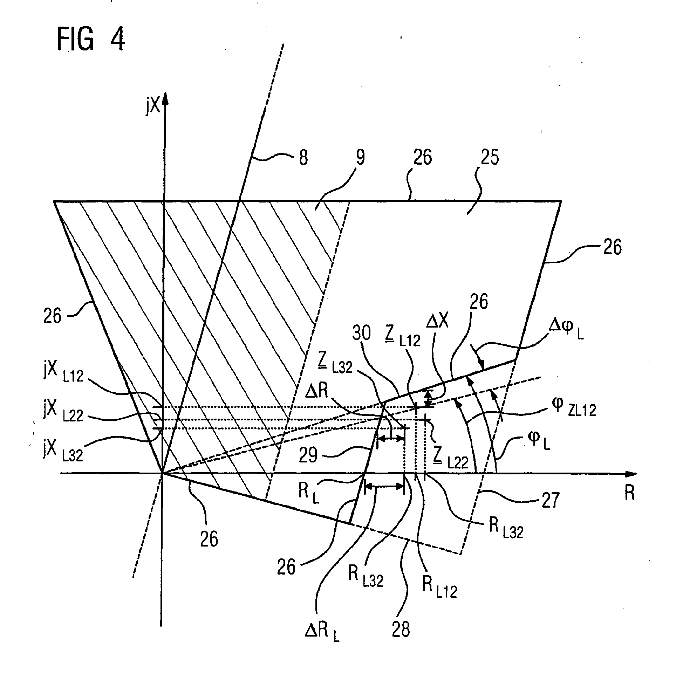

Eine Verbesserung des Verfahren ergibt sich allerdings, wenn eine Adaption des Auslösebereichs erfolgt. Eine Adaption erfolgt dann, wenn eine symmetrische Belastung der Leitungen L1, L2 bzw. L3 vorliegt, d. h. wenn die Abweichung AW der Impedanzwerte unterhalb der Grenzabweichung liegt. Zur Adaption ist der Schritt 24 vorgesehen. In Schritt 24 wird ein adaptiver Auslösebereich 25 (siehe Figur 4) berechnet und bei der nächsten Durchführung des Schritts 22 berücksichtigt. Die Adaption wird in Verbindung mit der Figur 4 erläutert. Durch Schritt 17 wird, wenn der Auslösebereichsadaptionsschritt 24 durchlaufen wurde, und wenn kein Fehler erkannt wurde, ein neuer Messzyklus gestartet.

In Figur 4 ist ein an die Impedanzwerte ZL12, ZL22 und ZL32 adaptierter Auslösebereich 25 mit der Umrandung 26 dargestellt. Zur Adaption an die Impedanzwerte ZL12, ZL22, ZL32 wurde ein erster Begrenzungsteil 29 der ursprünglichen rechten Begrenzung 27 (siehe FIG 2 und gestrichelt in FIG 4) in negativer R-Richtung derart verschoben, dass er die Abszisse bei R= RL schneidet. Gleichzeitig wurde ein weiterer Begrenzungsteil der ursprünglichen unteren Begrenzung 28 (siehe FIG 2 und gestrichelt dargestellt in FIG 4) zu der über den Winkel φL definierten Geraden verschoben, so dass im Vergleich zum ursprünglichen vorgegebenen Auslösebereich 6 rechts unten eine Ecke ausgenommen ist. Zur Adaption werden jeweils der Schnittpunkt RL mit der Abszisse und der Winkel φL der Geraden so berechnet, dass die Impedanzen ZL12, ZL22 und ZL32 außerhalb des adaptierten Auslösebereichs 25 liegen. Dabei wird der Schnittpunkt RL dadurch gewonnen, dass von dem kleinsten der Realteile der Impedanzwerte ZL12, ZL22 und ZL32, hier der Realteil RL32, ein vorgegebener Anteil ΔR subtrahiert wird, wie auch in Formel 3 angegeben.

$$R_L = Min\{R_{L12}, R_{L22}, R_{L32}\} - \Delta R_L \qquad (3)$$

Zur Bestimmung des Phasenwinkels φL des Begrenzungsanteils 30 des adaptiven Auslösebereiches 25 wird zu dem größten Phasenwinkel der Impedanzwerte ZL12, ZL22 und ZL32, hier φZL12, ein vorgegebener Winkelanteil φL addiert und der Winkel φL der Begrenzungsteil 30 entsprechend eingestellt. Dies ist entsprechend in Formel 4 angegeben.

$$\varphi_L = \arctan\left\{\frac{Max\{X_{L12}, X_{L22}, X_{L32}\}}{}\right\} + \Delta\varphi L \qquad (4)$$

Durch diese Adaption ist ein Mindestabstand zwischen dem Begrenzungsteil 29 des adaptiven Auslösebereiches 25 und den Impedanzwerten ZL12, ZL22 und ZL32 sichergestellt. Selbstverständlich ist es auch denkbar, dass zur Definition des Begrenzungsteils 30 anstelle eines Winkels ein Abstand ΔX unmittelbar ausgehend vom Größten der Impedanzwerte ZL12, ZL22 und ZL32 in X-Richtung angegeben wird. Gleiches gilt ebenso für die R-Richtung, wobei auch hier ein Abstand ΔR in R-Richtung unmittelbar ausgehend vom kleinsten der Impedanzwerte ZL12, ZL22 bzw. ZL32 vorgegeben sein kann. Durch die Adaption wird die Grenze 26 des adaptiven Auslösebereichs 25 den Impedanzwerten ZL12, ZL22 und ZL32 nachgeführt. Dies bedeutet, dass der adaptive Auslösebereich 25 vergrößert wird, wenn die Impedanzwerte ZL12, ZL22, ZL32, beispielsweise durch eine Laständerung, nach "unten außen" wandern. Ebenso wird der adaptive Auslösebereich 25 immer kleiner, je weiter die Impedanzwerte ZL12, ZL22 und ZL32 nach innen in Richtung imaginäre Achse wandern. Dabei stellt der vorgegebene Auslösebereich 6 eine obere Grenze für die Ausdehnung des Adaptiven Auslösebereichs 25 dar; der adaptive Auslösebereich kann höchstens den Bereich des vorgegebenen Auslösebereichs 6 überdecken. Der Festauslösebereich 9 stellt weiterhin eine Art untere Grenze für den adaptiven Auslösebereich dar, da bei immer weiter in Richtung Ordinate wandernden Impedanzwerten ZL12, ZL22 und ZL32 sofort dann eine Auslösung erfolgt, wenn einer der Impedanzwerte ZL12, ZL22 oder ZL32 den Festauslösebereich 9 erreicht hat, also darin liegt. Dann erfolgt auch keine Adaption des adaptiven Auslösebereiches 25 mehr, so dass er nicht kleiner werden kann als der Festauslösebereich 9.

Generell erfolgt bei einer unsymmetrischen Belastung, d. h. bei einer oberhalb der Grenzabweichung liegenden Abweichung AW für die Impedanzwerte keine Adaption des adaptiven Auslösebereiches 25 mehr.

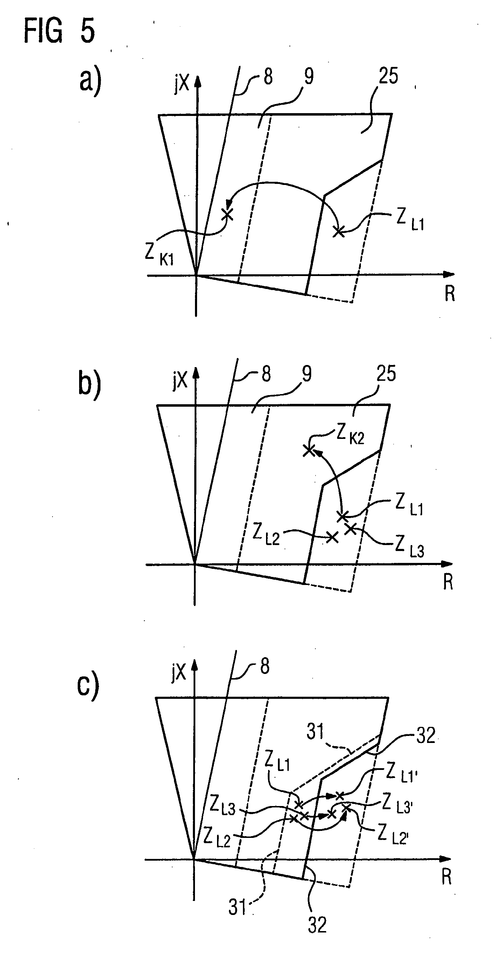

In Figur 5 sind schematisch verschiedene Lastfälle dargestellt. in Bild 5A erfolgt ein Lastsprung der Impedanz ZL1 zum Wert ZL1' in den Festauslösebereich 9, wobei sofort auf einen Fehler auf der Leitung L1 erkannt wird. Eine sofortige Auslösung erfolgt also auch, wenn eine Einschaltung der Leitung L1 auf einen Kurzschluss - bei dem der Impedanzwert ebenfalls im Festauslösebereich 9 liegt - erfolgt.

In Figur 5B ist eine Änderung des Impedanzwertes ZL1 bei einem hochohmigen Kurzschluss ZK2 auf der Leitung L1 dargestellt. Der neue Impedanzwert ZK2 liegt zunächst innerhalb des adaptiven Auslösebereiches 25, aber außerhalb des Festauslösebereichs 9; es wird also zur Beurteilung zusätzlich die Symmetrie der Belastung der Leitungen L1 bis L3 herangezogen. Da der aktuelle Impedanzwert ZK2 für die Leitung L1 erheblich von den Impedanzwerten ZL2 und ZL3 für die Leitungen L2 bzw. L3 abweicht, liegt die Abweichung AW für die Impedanzwerte oberhalb der Grenzabweichung, so dass auf einen Fehler auf der Leitung 1 geschlossen wird.

In Figur 5C ist der Fall dargestellt, dass sich die Impedanzwerte von ZL1, ZL2 und ZL3 zu Impedanzwerten ZL1', ZL2' und ZL3' verändern. Da die Belastung symmetrisch ist, erfolgt eine Auslösebereichsadaption. Die Begrenzung des ursprünglichen adaptiven Auslösebereiches ist mit dem Bezugszeichen 31 (gestrichelte Linien) dargestellt. Durch die Adaption ist der neue Auslösebereich 32 (mit durchgezogener Linie dargestellt) den neuen Impedanzwerten ZL1', ZL2' und ZL3' nachgefolgt, wobei er vergrößert wurde.

Das vorliegende Verfahren wurde zur Erkennung eines Fehlers auf der Leitung L1 beschrieben; selbstverständlich kann das gleiche Verfahren auch zur Erkennung eines Fehlers auf den Leitungen L2 bzw. L3 verwendet werden. Es sei nochmals darauf hingewiesen, dass das Verfahren gleichermaßen zur Erkennung von Fehlern in Phase-Phase-Schleifen (L1, L2, L3) und Phase-Erde-Schleifen (L12, L23, L13) einsetzbar ist.

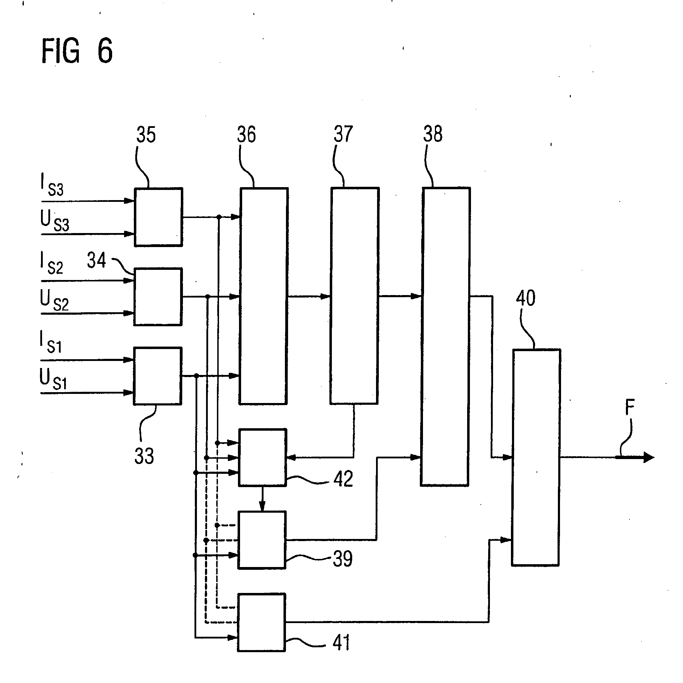

In Figur 6 ist eine erfindungsgemäße Distanzschutzeinrichtung 4 dargestellt. Sie weist drei Impedanzstufen 33 bis 35 auf, der die Strom- und Spannungsmessgrößen $I_{S1}$ und $U_{S1}$ bzw. $I_{S2}$ und $U_{S2}$ bzw. $I_{S3}$ und US3 zugeführt werden. Die Impedanzstufen 33 bis 35 dienen jeweils der Ermittlung eines ersten Impedanzwertes ZL1 der ersten Leitung L1, eines zweiten Impedanzwertes ZL2 der zweiten Leitung L2 bzw. eines dritten Impedanzwertes ZL3 der dritten Leitung L3.

Die Impedanzstufe 33 ist mit einer Signalstufe 41 verbunden, der sie den ersten Impedanzwert ZL1 zuleitet. In der Signalstufe 41 wird der erste Impedanzwert ZL1 mit einem Festauslösebereich verglichen. Liegt der erste Impedanzwert ZL1 innerhalb des Festauslösebereichs, so gibt die Signalstufe 41 ein Signal an die Fehlerstufe 40 ab, welches daraufhin das Fehlersignal F erzeugt.

Die Impedanzwerte ZL1, ZL2 und ZL3 werden auch einer Abweichungsstufe 36 zur Ermittlung einer Abweichung AW der Impedanzwerte voneinander zugeführt. Die Abweichungsberechnung kann in der Abweichungsstufe 36 beispielsweise anhand der Formeln 1 bzw. 2 erfolgen. Die ermittelte Abweichung AW wird von der Abweichungsstufe 36 einer dieser nachgeschalteten Vergleichsstufe 37 übergeben, in der die Abweichung AW der Impedanzwerte mit einer vorgegebenen Grenzabweichung verglichen wird. Liegt das Ergebnis oberhalb der Grenzabweichung, so wird dies der Vergleichsstufe 37 nachgeschalteten Verknüpfungsstufe 38 weitergegeben.

Parallel dazu wird der mit der ersten Impedanzstufe 33 ermittelte erste Impedanzwert ZL1 einer Komparationsstufe 39 zugeführt, in der der erste Impedanzwert ZL1 mit einem vorgegebenen Auslösebereich verglichen wird. Liegt der erste Impedanzwert ZL1 innerhalb des vorgegebenen Auslösebereiches, so wird dies an die Verknüpfungsstufe 38 weitergegeben. Die Verknüpfungsstufe 38 wiederum gibt ein Signal an die ihr nachgeschaltete Fehlerstufe 40 weiter, wenn sie von der Vergleichstufe 37 und der Komparationsstufe 39 ein Signal erhalten hat. Die Fehlerstufe 40 erzeugt aufgrund eines von der Verknüpfungsstufe 38 erhaltenen Signals ein einen Fehler anzeigendes Fehlersignal F.

Das Distanzschutzgerät 4 weist zusätzlich eine Adaptionsstufe 42 auf, die der Vergleichsstufe 37 nachgeschaltet ist. Die Vergleichsstufe 37 gibt in dem Fall, dass die Abweichung AW der Impedanzwerte kleiner als die vorgegebene Grenzabweichung ist, ein Signal an die Adaptionsstufe 42 ab. Diese ist auch mit den Impedanzstufen 33 bis 35 verbunden, so dass ihr auch die Impedanzwerte ZL1 bis ZL3 zugeleitet werden. Wenn die Adaptionsstufe 42 das Signal von der Vergleichsstufe 37 erhält, ermittelt sie unter Berücksichtigung der Impedanzwerte ZL1 bis ZL3 und des vorgegebenen Winkels $\Delta\varphi L$ und des vorgegebenen Abstands auf der Abszisse $\Delta RL$ einen adaptierten Auslösebereich, den sie der Komparationsstufe 39 übergibt. Diese berücksichtigt den neu berechneten adaptierten Auslösebereich bei dem jeweils nächsten Messdurchlauf anstelle des vorherigen vorgegebenen Auslösebereichs bzw. vorherigen adaptierten Auslösebereichs.

Wie mit den gestrichelten Linien angedeutet, können sowohl die Komparationsstufe 39 als auch die Signalstufe 41 mit allen drei Impedanzstufen 33 bis 35 verbunden sein. In diesem Fall ist die Distanzschutzeinrichtung 4 dazu geeignet, alle Leitungen L1 bis L3 auf einen Fehler zu überwachen. Auch hier sei darauf hingewiesen, dass die erfindungsgemäße Distanzschutzeinrichtung auch die Phase-Phase-Leitungen auf einen Fehler überwachen kann.

Die Impedanzstufen 33 bis 35, die Signalstufe 41, die Abweichungsstufe 36, die Vergleichsstufe 37, die Verknüpfungsstufe 38, die Komparationsstufe 39, die Fehlerstufe 40 und die Adaptionsstufe 42 können jeweils mittels integrierten Schaltkreisen und/oder mittels Datenverarbeitungsprogrammen realisiert sein. Dabei können die Stufen 33 bis 42 jeweils einzeln oder in beliebigen Kombinationen miteinander oder auch alle gemeinsam in einer Einheit zusammengefasst sein. Die Funktionen der Stufen 33 bis 42 können von einer gängigen Datenverarbeitungseinrichtung (Personal Computer) übernommen und ausgeführt werden.

## Patentansprüche

1. Distanzschutzverfahren zur Erfassung eines elektrischen Fehlers auf einem zu überwachenden Abschnitt (A) einer elektrischen Energieversorgungsstrecke mit zumindest einer ersten zu überwachenden elektrischen Leitung (L1) und einer zweiten elektrische Leitung (L2), bei dem

   - ein erster elektrischer Impedanzwert (ZL12) der ersten Leitung (L1) anhand von an dieser erfassten Spannungs- und Strommessgrößen ermittelt wird,
   - ein zweiter elektrischer Impedanzwert (ZL22) der zweiten Leitung (L2) anhand von an dieser erfassten Spannungs- und Strommessgrößen ermittelt wird, **dadurch gekennzeichnet, dass**
   - eine Abweichung (AW) des ersten Impedanzwerts (ZL12) von dem zweiten Impedanzwert (ZL22) ermittelt wird und dass
   - auf einen Fehler auf der ersten Leitung L1 erkannt wird, wenn der erste Impedanzwert (ZL12) innerhalb eines im Hinblick auf den zu überwachenden Abschnitt der Energieversorgungsstrecke vorgegebenen Auslösebereichs (6) liegt und die Abweichung (AW) der Impedanzwerte größer als eine vorgegebenen Grenzabweichung ist.

2. Distanzschutzverfahren nach Anspruch 1, **dadurch gekennzeichnet, dass** unmittelbar auf einen Fehler auf der ersten Leitung (L1) erkannt wird, wenn der erste Impedanzwert (ZL12) in einem im Vergleich zum vorgegebenen Auslösebereich (6) relativ kleinen Festauslösebereich (9) liegt.

3. Distanzschutzverfahren nach Anspruch 1 oder 2, **dadurch gekennzeichnet, dass** zur Ermittlung der Abweichung (AW) der Impedanzwerte die jeweiligen Realteile (RL12, RL22, RL32) der ermittelten Impedanzwerte (ZL12, ZL22, ZL32) bestimmt werden und die Abweichung (AW) als das Verhältnis aus der Differenz von größtem und kleinstem Realteil zu dem größten Realteil ermittelt wird (Formel 1).

4. Distanzschutzverfahren nach Anspruch 1 oder 2, **dadurch gekennzeichnet, dass** zur Ermittlung der Abweichung (AW) der Impedanzwerte die jeweiligen Imaginärteile (XL12, XL22, XL32) der ermittelten Impedanzwerte (ZL12, ZL22, ZL32) bestimmt werden und die Abweichung (AW) als das Verhältnis aus der Differenz von größtem und kleinstem Imaginärteil zu dem größten Imaginärteil ermittelt wird (Formel 2).

5. Distanzschutzverfahren nach einem der vorhergehenden Ansprüche,
**dadurch gekennzeichnet, dass** bei einer unterhalb der Grenzabweichung liegenden Abweichung (AW) der Impedanzwerte der Auslösebereich (25) derart adaptiert wird, dass die ermittelten Impedanzwerte außerhalb des adaptierten Auslösebereichs (25) mit einem vorgegebenen Mindestabstand dazu liegen.

6. Distanzschutzverfahren nach Anspruch 5,
**dadurch gekennzeichnet, dass** für den adaptiven Auslösebereich (25) der vorgegebene Auslösebereich (6) die obere Adaptionsgrenze bildet.

7. Distanzschutzverfahren nach einem der Ansprüche 5 bis 7,
**dadurch gekennzeichnet, dass** als vorgegebener Auslösebereich (6) eine unsymmetrische Polygonkennlinie vorgesehen ist.

8. Distanzschutzeinrichtung (4) zum Ermitteln eines elektrischen Fehlers auf einem Abschnitt einer elektrischen Energieversorgungsstrecke mit zumindest einer ersten zu überwachenden Leitung und einer zweiten Leitung, mit

- einer ersten Impedanzstufe (33) zur Ermittlung eines ersten Impedanzwerts (ZL1) der ersten Leitung (L1) anhand von an dieser erfassten Spannungs- und Strommesswerten,
- einer zweiten Impedanzstufe (34) zur Ermittlung eines zweiten Impedanzwerts (ZL2) der zweiten Leitung (L2) anhand von an dieser erfassten Spannungs- und Strommesswerten, **gekennzeichnet durch**
- eine Abweichungsstufe (36) zur Ermittlung einer Abweichung (AW) des ersten Impedanzwerts (ZL1) vom zweiten Impedanzwert (ZL2),
- eine Vergleichsstufe (37) zum Vergleichen der ermittelten Abweichung (AW) der Impedanzwerte mit einer vorgegebenen Grenzabweichung,
- einer Komparationsstufe (39) zum Vergleichen des ersten Impedanzwerts (ZL1) mit einem vorgegebenen Auslösebereich (6) und
- eine Fehlerstufe (40) zum Erzeugen eines einen Fehler anzeigenden Fehlersignals (F), wenn der Impedanzwert (ZL1) innerhalb des vorgegebenen Auslösebereichs (6) liegt und die Abweichung (AW) der Impedanzwert größer ist als die Grenzabweichung.

9. Distanzschutzeinrichtung nach Anspruch 8,
**dadurch gekennzeichnet, dass** eine Signalstufe (41) zur unmittelbaren Erzeugung des den Fehler anzeigenden Fehlersignals (F) in dem Fall, dass der erste Impedanzwert (ZL1) in einem im Vergleich zum vorgegebenen Auslösebereich (6) relativ kleinen Festauslösebereich (9) liegt, vorgesehen ist.

10. Distanzschutzeinrichtung nach einem der Ansprüche 8 oder 9,
**dadurch gekennzeichnet, dass** eine Adaptionsstufe (42) vorgesehen ist, mit der der Auslösebereich (25) unter Berücksichtigung der ermittelten Impedanzwerte (ZL1, ZL2, ZL3) und eines vorgegeben Mindestabstands zwischen den Impedanzwerten und dem Auslösebereich adaptiert wird.

**Claims**

1. Distance protection method for detecting an electrical fault in a section (A) to be monitored of an electrical power supply path comprising at least a first electrical line (L1) to be monitored and a second electrical line (L2), in which

- a first electrical impedance value (ZL12) of the first line (L1) is determined from voltage measurements and current measurements acquired on said line,
- a second electrical impedance value (ZL22) of the second line (L2) is determined from voltage measurements and current measurements acquired on said line, **characterized in that**
- a deviation (AW) of the first impedance value (ZL12) from the second impedance value (ZL22) is determined, and **in that**
- a fault is identified in the first line L1 if the first impedance value (ZL12) lies within a trigger region (6) defined with regard to the section to be monitored of the power supply path, and the deviation (AW) of the impedance values is greater than a defined limit deviation.

2.  Distance protection method according to Claim 1,
    **characterized in that** a fault in the first line (L1) is identified immediately if the first impedance value (ZL12) lies in a fixed trigger region (9) that is relatively small compared with the defined trigger region (6).

3.  Distance protection method according to Claim 1 or 2,
    **characterized in that** to determine the deviation (AW) of the impedance values, the respective real parts (RL12, RL22, RL32) of the determined impedance values (ZL12, ZL22, ZL32) are found and the deviation (AW) is determined as the ratio of the difference between the largest and smallest real part to the largest real part (formula 1).

4.  Distance protection method according to Claim 1 or 2,
    **characterized in that** to determine the deviation (AW) of the impedance values, the respective imaginary parts (XL12, XL22, XL32) of the determined impedance values (ZL12, ZL22, ZL32) are found and the deviation (AW) is determined as the ratio of the difference between the largest and smallest imaginary part to the largest imaginary part (formula 2).

5.  Distance protection method according to any of the preceding claims,
    **characterized in that** for a deviation (AW) of the impedance values that lies below the limit deviation, the trigger region (25) is adapted in such a way that the determined impedance values lie outside the adapted trigger region (25) at a defined minimum separation therefrom.

6.  Distance protection method according to Claim 5,
    **characterized in that** the defined trigger region (6) forms the upper adaptation limit for the adaptive trigger region (25).

7.  Distance protection method according to any of Claims 5 to 7,
    **characterized in that** an asymmetric polygon characteristic is provided as the defined trigger region (6).

8.  Distance protection device (4) for determining an electrical fault in a section of an electrical power supply path comprising at least a first line to be monitored and a second line, having

    - a first impedance stage (33) for determining a first impedance value (ZL1) of the first line (L1) from voltage measurements and current measurements acquired on said line,
    - a second impedance stage (34) for determining a second impedance value (ZL2) of the second line (L2) from voltage measurements and current measurements acquired on said line, **characterized by**
    - a deviation stage (36) for determining a deviation (AW) of the first impedance value (ZL1) from the second impedance value (ZL2),
    - a comparison stage (37) for comparing the determined deviation (AW) of the impedance values with a defined limit deviation,
    - a comparing stage (39) for comparing the first impedance value (ZL1) with a defined trigger region (6), and
    - a fault stage (40) for generating a fault signal (F) indicating a fault if the impedance value (ZL1) lies within the defined trigger region (6), and the deviation (AW) of the impedance values is greater than the limit deviation.

9.  Distance protection device according to Claim 8,
    **characterized in that** a signal stage (41) is provided for immediately generating the fault signal (F) indicating the fault, in the case that the first impedance value (ZL1) lies in a fixed trigger region (9) that is relatively small compared with the defined trigger region (6).

10. Distance protection device according to either of Claims 8 and 9,
    **characterized in that** an adaptation stage (42) is provided, by means of which the trigger region (25) is adapted, taking into account the determined impedance values (ZL1, ZL2, ZL3) and a defined minimum separation between the impedance values and the trigger region.

**Revendications**

1.  Procédé de protection de distance, pour détecter un défaut électrique sur un tronçon ( A ) à contrôler d'une section d'alimentation en énergie électrique, comprenant au moins une première ligne ( L1 ) électrique à contrôler et une deuxième ligne ( L2 ) électrique, dans lequel

- on détermine une première valeur ( ZL12 ) d'impédance électrique de la première ligne ( L1 ) au moyen de grandeurs de mesure de tension et de courant relevées sur celle-ci,

- on détermine une deuxième valeur ( ZL22 ) d'impédance électrique de la première ligne ( L1 ) au moyen de grandeurs de mesure de tension et de courant relevées sur celle-ci, **caractérisé en ce que**

- on détermine un écart ( AW ) de la première valeur ( ZL12 ) d'impédance à la deuxième valeur ( ZL22 ) d'impédance et **en ce que**

- on reconnaît un défaut sur la première ligne ( L1 ), lorsque la première valeur ( ZL12 ) d'impédance se trouve dans une plage ( 6 ) de déclenchement prescrite eu égard au tronçon à contrôler de la section d'alimentation en énergie et lorsque l'écart ( AW ) des valeurs d'impédance est plus grand qu'un écart limite prescrit.

**2.** Procédé de protection de distance suivant la revendication 1,
**caractérisé en ce que**
on reconnaît directement un défaut sur la première ligne ( L1 ), lorsque la première valeur ( ZL12 ) d'impédance se trouve dans une plage ( 9 ) de déclenchement fixe relativement petite par rapport à la plage ( 6 ) de déclenchement prescrite.

**3.** Procédé de protection de distance suivant la revendication 1 ou 2,
**caractérisé en ce que**
pour la détermination de l'écart ( AW ) des valeurs d'impédance, on détermine les parties ( RL12, RL22, RL32 ) respectives réelles des valeurs ( ZL12, ZL22, ZL32 ) d'impédance déterminées et on détermine l'écart ( AW ) en tant que rapport entre la différence de la partie réelle la plus grande et de la partie réelle la plus petite à la partie réelle la plus grande ( formule 1 ).

**4.** Procédé de protection de distance suivant la revendication 1 ou 2,
**caractérisé en ce que**
pour la détermination de l'écart ( AW ) des valeurs d'impédance, on détermine les parties ( XL12, XL22, XL32 ) imaginaires respectives des valeurs ( ZL12, ZL22, ZL32 ) d'impédance déterminées et on détermine l'écart ( AW ) en tant que rapport entre la différence de la partie imaginaire la plus grande et de la partie imaginaire la plus petite à la partie imaginaire la plus grande ( formule 2 ).

**5.** Procédé de protection de distance suivant l'une des revendications précédentes,
**caractérisé en ce que**
si l'écart ( AW ) des valeurs d'impédance est inférieur à l'écart limite, on adapte la plage ( 25 ) de déclenchement, de manière à ce que les valeurs d'impédance déterminées se trouvent en dehors de la plage ( 25 ) de déclenchement adaptée avec un écart minimum prescrit.

**6.** Procédé de protection de distance suivant la revendication 5,
**caractérisé en ce que**
pour la plage ( 25 ) de déclenchement adaptative, la zone ( 6 ) de déclenchement prescrite forme la limite supérieure d'adaptation.

**7.** Procédé de protection de distance suivant l'une des revendications 5 à 7,
**caractérisé en ce qu'**il est prévu une caractéristique polygonale dissymétrique comme plage ( 6 ) de déclenchement prescrite.

**8.** Dispositif ( 4 ) de protection de distance pour la détermination d'un défaut électrique sur un tronçon d'une section d'alimentation en énergie électrique, comprenant au moins une première ligne à contrôler et une deuxième ligne, comprenant

- un premier étage ( 33 ) d'impédance pour la détermination d'une première valeur ( ZL1 ) d'impédance de la première ligne ( L1 ) au moyen de valeurs de mesure de tension et de courant relevées sur celles-ci,

- un deuxième étage ( 34 ) d'impédance pour la détermination d'une deuxième valeur ( ZL2 ) d'impédance de la première ligne ( L2 ) au moyen de valeurs de mesure de tension et de courant relevées sur celles-ci,
**caractérisé par**

- un étage ( 36 ) d'écart pour la détermination d'un écart ( AW ) de la première valeur ( ZL1 ) d'impédance à la deuxième valeur ( ZL2 ) d'impédance,

- un étage ( 37 ) de comparaison pour la comparaison de l'écart ( AW ) déterminé des valeurs d'impédance à un écart limite prescrit,

- un étage ( 39 ) comparatif pour la comparaison de la première valeur ( ZL1 ) d'impédance à une plage ( 6 ) de déclenchement prescrite et
- un étage ( 40 ) de défaut pour la production d'un signal ( F ) de défaut indiquant un défaut, lorsque la valeur ( ZL1 ) d'impédance se trouve à l'intérieur de la plage ( 6 ) de déclenchement prescrite et lorsque l'écart ( AW ) des valeurs d'impédance est plus grand que l'écart limite.

9. Procédé de protection de distance suivant la revendication 8,
   **caractérisé en ce qu'**il est prévu un étage ( 41 ) de signalisation pour la production directe du signal ( F ) de défaut indiquant le défaut, dans le cas où la première valeur ( ZL1 ) d'impédance se trouve dans une plage ( 9 ) de déclenchement fixe relativement petite par rapport à la plage ( 6 ) de déclenchement prescrite.

10. Procédé de protection de distance suivant l'une des revendications 8 ou 9,
    **caractérisé en ce qu'**il est prévu un étage ( 42 ) d'adaptation, par lequel la plage ( 25 ) de déclenchement est adaptée en tenant compte des valeurs ( ZL1, ZL2, ZL3 ) d'impédance déterminées et d'une distance minimum prescrite entre les valeurs d'impédance et la plage de déclenchement.

# FIG 1

EP 1 322 019 B1

FIG 2

FIG 3

FIG 4

## FIG 5

### a)

### b)

### c)

FIG 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0994548 A

**In der Beschreibung aufgeführte Nicht-Patentliteratur**

- **Heinz Clemens ; Klaus Rothe.** Schutztechnik in Elektroenergiesystemen. VEB Verlag Technik, 1991, 65-69